# EUROPEAN PATENT SPECIFICATION

(11) **EP 3 414 287 B1**
(45) Date of publication and mention of the grant of the patent: **18.12.2019**
(21) Application number: 16710502.2
(22) Date of filing: 08.02.2016
(51) Int. Cl.: C09D 5/00

(54) **AN INORGANIC ANTIBACTERIAL AMORPHOUS COATING FOR CERAMIC SURFACES**
ANORGANISCHE ANTIBAKTERIELLE AMORPHE BESCHICHTUNG FÜR KERAMISCHE OBERFLÄCHEN
REVÊTEMENT AMORPHE ANTIBACTÉRIEN INORGANIQUE POUR SURFACES CÉRAMIQUES

(43) Date of publication of application: 19.12.2018
(73) Proprietor: Kaleseramik Canakkale Kalebodur Seramik Sanayi Anonim Sirketi, 17430 Canakkale (TR)
(72) Inventor: TARHAN, Sefik Baran, 17430 Canakkale (TR); TAYCU, Asl, Izmir (TR); EKER, Arzu, Canakkale (TR); TASKIRAN, Mehmet Ugur, 17430 Canakkale (TR)
(86) International application number: PCT/TR2016/050031
(87) International publication number: WO 2017/138892

(56) References cited:
- EP-A1- 1 110 924
- EP-A1- 1 277 711
- EP-A1- 1 553 068

## Description

### Field of the Invention

The present invention relates to an inorganic antibacterial amorphous coating applied via single firing method to the surfaces of the ceramic sanitaryware such as reservoirs, water closets, bides, sinks and pedestals, on which no protective engobe layer is applied, and which are produced by vitrified (VC) and fireclay (FC) casting slips.

### Background of the Invention

The mixtures and the layer, which are obtained from ground ceramic raw materials with suitable compositions and which can form a structure similar to a glass structure as a result of the firing performed on the ceramic body, is called glaze. The main purpose for glazing ceramic surfaces is to coat the ceramic body having a porous surface with micro level roughness by a vitrified layer having a non-porous and flat outer surface thereby bringing it to a healthier and easy-to-clean state. Another purpose is to provide an aesthetically pleasant appearance. The glaze also plays a role in increasing strength of the product and often the surface hardness, and enhances resistance against chemical external factors. The vitrified bodies are coated with a generally white opaque-glossy glaze having high wear resistance and high brightness, and the zircon particles dispersed in the transparent vitrified structure in opaque-glossy glazes serve as opacifiers. In transparent glazes, if the glaze passes most of the coming electromagnetic radiation through, the material seems transparent; while in opaque glazes, the coming light cannot pass through the material and is diffracted. Another mechanism required for opacification is formation of crystalline structures in the glaze. Especially in long periods of firing, the crystals start to nucleate in the transparent glaze surface with amorphous structure and ruins glossiness and smoothness of the surface. The surface becomes rougher. In addition, particularly Co-Si, Co-Al, Cd-S, Cd-Se etc. pigments trigger crystallization in transparent glazes.

In ceramic sanitaryware, about 3-13% zircon is sufficient for opacification and the recrystallizing zircons are carried to the surface and provide a rough appearance on the surface. Generally, the amount of dirt forming on the surface depending on the place and form of use varies according to the roughness on the surface. In the earlier studies, Ozbek et al¹ applied a transparent glaze with a melting point of 810°C on the glaze of a standard sanitaryware and performed double firing. However, they observed that zircon crystals were carried to the surface of the transparent glaze at the end of firing and therefore they could not obtain the smooth surface that the transparent glaze surface should have. In this study, the project was not successful since zircon was carried from the first glaze layer to the second transparent upper glaze layer. In the prior art, since the basic, earth alkaline (CaO, MgO, ZnO, BaO) and alkaline (Na₂O, K₂O), acidic (SiO₂, B₂O₃) oxides in the lower and upper glaze layers were not compatible with each other, chemical reactions took place between the lower and upper glaze layers. On the other hand, even if a transparent glaze is obtained at the upper glaze by fritting the raw glaze likewise, surface quality of the glaze is deformed as a result of the chemical reactions that take place at both layers.
¹ Double Layer Glaze Application for Vitrifies Glazes and Surface Properties K.Özbek, N.Ay.

In the patent document no. TR20050001273, one of the known applications in the state of the art, glaze is applied to the body which is pre-fired and then it is refired. In the said patent document, double layer glaze (lower glaze and upper glaze) technique was employed and double firing was performed. Since in the study of the present invention, different from the above, there is a single firing, it provides advantage in saving natural gas.

Another problem is that the gases released from the body form thin needle holes on the glaze surface because they cannot be discharged from the body before the glaze melts and covers the surface. In order to solve this problem, in the patent documents no. US6699606132 and US6383646, double glaze application (lower and upper) was performed on the engobe surface but this time single firing technique was used. However since the raw materials used on the upper glaze were not fritted, the materials were required to be ground for a long time. In the study of the present invention, engobe is not used, but the lower glaze layer acts as engobe as it retains the gases discharged from the body. Thus, ease of application is provided. Furthermore, since only frit is used in the upper glaze, grinding time of the glaze decreased 50% thereby enabling energy saving. Thus the production process is simplified and speeded up.

The Chinese patent document no. CN102515774 discloses a transparent upper glaze which is gelatinized, applied with printing technique and formed on a ceramic material with single firing and a method for applying the same. The said method is not a system applied to ceramic sanitaryware products, because the said decoration systems can be applied on products such as ceramic coating materials, glass bottles, tableware, etc. Ceramic sanitaryware products are decorated by transfer printing method. Furthermore, homogenous application of dry granules disclosed in the art on surfaces of three dimensional products with complex forms such as ceramic sanitaryware does not seem possible. Additionally, the technique requires an additional chemical for keeping the dry granules on the surface of the product. Different from the said Chinese patent document, the study of the present invention comprises agitation/spraying/immersion method and can be applied to completely three dimensional products with complex forms. In addition, since dry application is used instead of dry granules, the transparent glaze can disperse homogenously on the product surface.

Chinese patent document no. CN1389436 discloses a nano size self-cleaning surface glazing method which is particularly applied to vitrified sanitaryware. In this method, silver and zinc ions are directly added into the glaze and fired at a temperature of 1200°C. However, in antibacterial ceramics, a carrier body should be provided and metal ions should be easily added to the structure. Antibacterial ceramics can be classified as having amorphous silicon, zeolite and calcium phosphate bodies based on the carrier body. Common feature of these materials is having large crystal structure. Thus metal ions can enter into the system and can be active on the bacteria². Hence, in systems with amorphous structures not having crystal lattice structure, antibacterial activity of these ions cannot be measured or proved.
² Kim TN, Feng QL, Kim JO, Wu J, Wang H, Chen CG, Cui FZ. Antimicrobial effects of metal ions in hydroxyapatite. Journal of Materials Science: Materials in Medicine 1998;9:129-34.

Turkish utility model document no. TR201400163 discloses a glazing method used for vitrified surfaces that reduces roughness of ceramic sanitaryware. However, the said method cannot prevent the crystallizations occurring on the permeable glazes applied on glaze surfaces containing pigments. Therefore, color pigments cannot be used in products produced with this method.

None of the applications used in the prior art is for providing an antibacterial and dirt-repellent activity on opaque glaze surface with pigments. By means of antibacterial ceramic coating of the present invention, the above mentioned problems in the prior art are solved.

### Summary of the Invention

The objective of the present invention is to provide an inorganic antibacterial amorphous coating that provides features of gloss, smoothness and dirt-repellence to the ceramic body surface.

Another objective of the present invention is to provide an inorganic antibacterial amorphous coating which enables ceramic sanitaryware to be coated in industrial furnaces by applying single firing method and which is comprised of an inorganic porous surface coating lower layer containing color pigments and a transparent upper glaze layer containing additives.

### Detailed Description of the Invention

Subject-matter of the present invention are antibacterial amorphous coatings according to claims 1-7 as attached.

According to the present invention the inorganic porous surface coating lower layer comprises Co-Si, Co-Al, Cd-S and/or Cd-Se and the color pigments defined in the visible color spectrum. Preferably, 0-5% by weight of each pigment is present in the lower glaze layer.

The inorganic porous surface coating lower layer whose compositions are given above has a density of 1650-1750 g/lt and is obtained by being ground for 5-10 hours.

Water absorption rate of the inorganic porous surface coating lower layer is 0.01 to 10%.

Upon removing the opacifier oxides such as ZrO₂, SnO₂, TiO₂ from the inorganic porous surface coating lower layer composition of the present invention and by finely grinding the new inorganic composition and firing at about 1200-1250°C, transparent inorganic amorphous surface is obtained. In these studies conducted by using matt or opaque inorganic coating compositions, about 40% less rough glaze surface was obtained compared to the standard glaze surface and glossiness was increased about 15% without using engobe on the body and by ensuring grinding efficiency upon using glazes prepared in larger particle size.

In a preferred embodiment of the invention, the transparent upper glaze layer comprises the compounds of SiO₂, Al₂O₃, CaO, MgO, Na₂O, K₂O, B₂O₃ BaO and/or ZnO.

In a preferred embodiment of the invention, the first composition developed for the transparent upper glaze layer comprises by weight of 60-70% SiO₂, 5-10% Al₂O₃, 10-20% CaO, 0.01-5% MgO, 0.01-5% Na₂O, 0.01-5% K₂O, 0.01-2% B₂O₃, 0-5% BaO and/or 0.01-5% ZnO compounds.

In a preferred embodiment of the invention, the second composition developed for the transparent upper glaze layer comprises by weight of 60-70% SiO₂, 0.01-5% Al₂O₃, 0.01-5% CaO, 0.01-5% MgO, 0.01-5% Na₂O, 0.01-5% K₂O and/or 5-10% ZnO and 0-5% BaO compounds.

In a preferred embodiment of the invention, the raw material mixture prepared for the transparent upper glaze layer is molten at 1250-1450°C and vitrified. The vitrified material is ground.

In a preferred embodiment of the invention, the antibacterial ceramic coating comprises the above mentioned first compositions of the inorganic porous surface coating lower layer and the transparent upper glaze layer.

In a preferred embodiment of the invention, the antibacterial ceramic coating comprises the above mentioned second compositions of the inorganic porous surface coating lower layer and the transparent upper glaze layer.

In a preferred embodiment of the invention, α-Al₂O₃, β-Al₂O₃, α+β-Al₂O₃, (α+β-Al₂O₃ + Na₂O+MgO), kaolin, clay, metakaolin and/or quartz are added to the transparent upper glaze layer.

In a preferred embodiment of the invention, a carboxymethyl cellulose (CMC) based binding additive is added to the transparent upper glaze layer thereby enabling the transparent glaze to be homogenously dispersed on the inorganic porous surface coating lower layer. The ratio of the binder comprising carboxymethyl cellulose and derivatives thereof provided on the transparent upper glaze layer is 0.01 to 12%.

In a preferred embodiment of the invention, a previously vitrified matt inorganic additive is added to the transparent upper glaze layer and thus the surface of the transparent upper glaze layer is enabled to become smooth. The ratio of the previously vitrified matt inorganic additive which is provided on the transparent upper glaze layer is 0.01 to 15%.

The antibacterial ceramic coating of the present invention is applied to the surfaces of the ceramic sanitaryware such as reservoirs, water closets, bides, urinals, toilets, shower trays, sinks and pedestals, on which no protective engobe layer is applied and which are produced by vitrified (VC) and fireclay (FC) casting slips, by means of agitation/spraying/immersion methods. The products on which the invention is applied are fired in industrial furnaces via single firing method.

The products, on which the invention is applied, are obtained by shaping and drying the ceramic clay, which is made of feldspar, quartz, clay and kaolin raw materials and prepared at a weight of 1750-1950 g/lt and which has a flow rate of 200-350° Gallenkamp viscosity, in plaster molds.

The mixture prepared for the inorganic porous surface coating lower layer is applied on the shaped product by spraying via spray gun, and after it dries for 5 minutes, the mixture or doped mixture prepared for the transparent upper glaze layer is applied on the inorganic porous surface coating lower layer via spray gun. The products which are allowed to wait at production ambient conditions are fired at a temperature of 1200-1250 °C.

When the newly developed antibacterial ceramic coated sink and the standard commercial sink are compared, it is determined that averagely 97% less bacterial adhesion occurs on the newly developed sink according to the number of CFUs (Colony Forming Unit), and that after cleaning with bleach, this ratio becomes 100%.

No crystal transport has occurred on the surface of the newly developed sink. Furthermore, solutions are provided for preventing crystallization, opacification of the transparent, permeable or semi-permeable glaze, which is applied on the inorganic porous surface coating lower layer containing pigment, during firing.

Particularly, in order to prevent formation of CaO-MgO alumina silicate structures and crystallizations in the vitrified structure, aluminum hydroxide, calcined alumina (α Al₂O₃, (α+β) Al₂O₃ + Na₂O+MgO), kaolin, clay, metakaolin and quartz are added to the glaze. The matt inorganic additive vitrified in advance and organic based binders and additives are added onto the transparent upper glaze layer and thus all kinds of crystal formation that will increase pollution and bacteria formation on the surface are prevented and the surface is made smoother.

Resistance test is applied on the newly developed antibacterial ceramic coated sink surface by following the below given method steps according to the TS EN 14688 temperature changes:
- The residual dirt layer formed on the inner chamber of the sink at the end of the test is wiped by the help of a dry napkin.
- 2 different concentrations of bacteria inoculation were carried out, 9000 CFU/ml and 1800 CFU/ml respectively in 1 L of water, for the standard commercial sink and newly developed sink samples.
- The water containing the bacteria of the same conditions were poured down to the sinks and swap samples (I, II, III) were taken from different regions of the sinks.
- The swap samples were applied to the solid medium, and after being incubated at 37°C, the bacteria colonies were counted and the number of colony forming units (CFU) were calculated (Table 1 and 2). The ratio of decrease in bacterial adhesion was determined (Table 3).

**Table 1. Test results for standard commercial sink**

| Bacteria (CFU) concentration and identification | 1^{st} Region | 2^{nd} Region | 3^{rd} Region |
|---|---|---|---|
| 9000 CFU/ml | 56 | 31 | 187 |
| 1800 CFU/ml | 173 | 91 | 432 |
| After cleaning with pure water | 16 | 5 | 25 |
| After cleaning with bleach | 10 | - | 18 |

**Table 2. Test results for newly developed antibacterial amorphous coated sink**

| Bacteria (CFU) concentration and identification | 1^{st} Region | 2^{nd} Region | 3^{rd} Region |
|---|---|---|---|
| 9000 CFU/ml | - | - | 16 |
| 1800 CFU/ml | 13 | 3 | 25 |
| After cleaning with pure water | - | - | - |
| After cleaning with bleach | - | - | - |

**Table 3. Table showing the decrease ratios in bacterial adhesion**

| Bacteria (CFU) concentration and identification | Normal reference sink (average CFU) | Coated sink (average CFU) | Decrease % |
|---|---|---|---|
| 9000 CFU/ml | 91 | 5 | 94.5 |
| 1800 CFU/ml | 232 | 14 | 94 |
| After cleaning with pure water | 15 | - | 100 |
| After cleaning with bleach | 9 | - | 100 |

In addition to these tests, roughness values of the glaze surfaces of the developed and standard products were measured by using surface roughness measurement device. Roughness value (Ra) of the standard commercial product surface was determined as 0.15-0.35 (±0.03) µm and the surface of the developed product was determined as 0.05-0.09 (±0.03) µm. As can be seen from this test result as well, by means of the antibacterial ceramic coating of the invention, the product surfaces can have a very smooth structure.

## Claims

1. An antibacterial amorphous coating, which provides features of gloss, smoothness and dirt-repellence to the ceramic body surface, applied by using single firing method in industrial furnaces at a temperature of 1200 to 1250 °C, **characterized in that** it basically comprises
▪ an opaque inorganic porous surface coating lower layer containing Co-Si, Co-Al, Cd-S and/or Cd-Se and color pigments defined in the visible color spectrum, and
▪ a transparent upper glaze layer containing at least one additive that prevents crystallization, and
▪ a binder comprising carboxymethyl cellulose and derivatives thereof which enables the transparent upper glaze layer to be homogenously dispersed on the inorganic porous surface coating lower layer.

2. An antibacterial amorphous coating according to Claim 1, **characterized in that** the water absorption rate of the inorganic porous surface coating lower layer is 0.01 to 10%.

3. An antibacterial amorphous coating according to Claim 1, **characterized in that** the transparent upper glaze layer comprises α-Al₂O₃, β-Al₂O₃, α+β- Al₂O₃, (α+β-Al₂O₃ + Na₂O + MgO), kaolin, clay, metakaolin and/or quartz.

4. An antibacterial amorphous coating according to Claim 1, **characterized in that** it comprises a previously vitrified matt inorganic additive to provide surface smoothness and dirt-repellence features to the transparent upper glaze layer.

5. An antibacterial amorphous coating according to Claim 5, **characterized in that** the ratio of the previously vitrified matt inorganic additive on the transparent upper glaze layer is 0.01 to 15%.

6. An antibacterial amorphous coating according to Claim 1, **characterized in that** the ratio of the binder comprising carboxymethyl cellulose and derivatives thereof on the transparent upper glaze layer is 0.01 to 12%.

7. An antibacterial amorphous coating according to Claim 1, **characterized in that** the ratio of the surface roughness value (Ra) of the transparent upper glaze layer is 0.01-0.15 (-0.01;+0.4) µm.

## Patentansprüche

1. Antibakterielle amorphe Beschichtung, die Merkmale von Glanz, Glätte und Schmutzabweisung auf die durch Einzelbrand in Industrieöfen bei einer Temperatur von 1200 bis 1250°C aufgebrachte Keramikkörperoberfläche bereitstellt, **dadurch gekennzeichnet, dass** es im Wesentlichen umfasst
▪ eine opake anorganische poröse Oberflächenbeschichtung Unterschicht, die Co-Si, Co-Al, Cd-S und/oder Cd-Se und im sichtbaren Farbspektrum definierte Farbpigmente enthält, und
▪ eine transparente obere Glasurschicht, die mindestens ein Additiv enthält, das die Kristallisation verhindert, und
▪ ein Bindemittel, umfassend Carboxymethylcellulose und Derivate davon, das es ermöglicht, die transparente obere Glasurschicht homogen auf der unteren Schicht der anorganischen porösen Oberflächenbeschichtung zu dispergieren.

2. Antibakterielle amorphe Beschichtung nach Anspruch 1, **dadurch gekennzeichnet, dass** die Wasserabsorptionsrate der unteren Schicht der anorganischen porösen Oberflächenbeschichtung 0.01 bis 10% beträgt.

3. Antibakterielle amorphe Beschichtung nach Anspruch 1, **dadurch gekennzeichnet, dass** die obere transparente Glasurschicht α-Al₂O3, β-Al₂O₃, α+β - Al₂O₃, (α+β-Al₂O₃ + Na₂O + MgO), Kaolin, Ton, Metakaolin und/oder Quarz umfasst.

4. Antibakterielle amorphe Beschichtung nach Anspruch 1, **dadurch gekennzeichnet, dass** sie ein zuvor verglastes anorganisches mattes Additiv umfasst, zur Bereitstellung auf der transparenten oberen Glasurschicht von Oberflächenglätte und Schmutzabweisungseigenschaften.

5. Antibakterielle amorphe Beschichtung nach Anspruch 5, **dadurch gekennzeichnet, dass** das Verhältnis des zuvor verglasten matten anorganischen Additivs auf der oberen transparenten Glasurschicht 0.01 bis 15% beträgt

6. Antibakterielle amorphe Beschichtung nach Anspruch 1, **dadurch gekennzeichnet, dass** das Verhältnis des Bindemittels, umfassend Carboxymethylcellulose und Derivate davon, auf der oberen transparenten Glasurschicht 0.01 bis 12% beträgt.

7. Antibakterielle amorphe Beschichtung nach Anspruch 1, **dadurch gekennzeichnet, dass** das Verhältnis des Oberflächenrauhigkeitswertes (Ra) der oberen transparenten Glasurschicht 0.01-0.15 (-0.01; +0.4) µm beträgt.

## Revendications

1. Revêtement amorphe antibactérien, qui offre des caractéristiques de brillance, de douceur et de résistance à la saleté à la surface du corps céramique, appliqué par la méthode de cuisson unique dans des fours industriels à une température de 1200 à 1250 °C, **caractérisé en ce qu'il** comprend essentiellement
▪ une couche inférieure de revêtement de surface poreuse inorganique opaque contenant Co-Si, Co-Al, Cd-S et/ou Cd-Se et des pigments de couleur définis dans le spectre de couleur visible, et
▪ une couche de glaçure supérieure transparente contenant au moins un additif qui empêche la cristallisation, et
▪ un liant comprenant de la carboxyméthylcellulose et ses dérivés, qui permet de disperser de manière homogène la couche de glaçure supérieure transparente sur la couche inférieure de revêtement inorganique poreux de la surface.

2. Revêtement amorphe antibactérien selon la revendication 1, **caractérisé en ce que** le taux d'absorption d'eau de la couche inférieure du revêtement de surface inorganique poreux est de 0.01 à 10 %.

3. Revêtement amorphe antibactérien selon la revendication 1, **caractérisé en ce que** la couche de glaçure supérieure transparente comprend α-Al₂O₃, β-Al₂O₃, α+β- Al₂O₃, ((α+β-Al₂O₃ + Na₂O + MgO), kaolin, argile, métakaolin et/ou quartz.

4. Revêtement amorphe antibactérien selon la revendication 1, **caractérisé en ce qu'**il comprend un additif inorganique mat vitrifié au préalable pour donner à la couche de glaçure supérieure transparente une surface lisse et résistante à la saleté.

5. Revêtement amorphe antibactérien selon la revendication 5, **caractérisé en ce que** le rapport de l'additif inorganique mat vitrifié au préalable sur la couche de glaçure supérieure transparente est de 0.01 à 15%.

6. Revêtement amorphe antibactérien selon la revendication 1, **caractérisé en ce que** le rapport du liant comprenant de la carboxyméthylcellulose et ses dérivés sur la couche de glaçure supérieure transparente est de 0.01 à 12%.

7. Revêtement amorphe antibactérien selon la revendication 1, **caractérisé en ce que** le rapport de la valeur de rugosité de surface (Ra) de la couche de glaçure supérieure transparente est de 0.01-0.15 (-0.01 ;+0.4)µm.
